Europäisches Patentamt

European Patent Office

Office européen des brevets

(19)

(11) Veröffentlichungsnummer: **0 317 917 B1**

(12) **EUROPÄISCHE PATENTSCHRIFT**

(45) Veröffentlichungstag der Patentschrift:
**19.06.91 Patentblatt 91/25**

(51) Int. Cl.$^5$: **A23G 1/00**, A23G 1/04

(21) Anmeldenummer: **88119248.8**

(22) Anmeldetag: **18.11.88**

(54) **Verfahren zur Herstellung von zuckerfreien, diätetischen und/oder zahnschonenden Schokoladen.**

(30) Priorität: **25.11.87 DE 3739999**

(43) Veröffentlichungstag der Anmeldung:
**31.05.89 Patentblatt 89/22**

(45) Bekanntmachung des Hinweises auf die Patenterteilung:
**19.06.91 Patentblatt 91/25**

(84) Benannte Vertragsstaaten:
**AT BE CH DE ES FR GB GR IT LI NL SE**

(56) Entgegenhaltungen:
**WO-A-80/01869**
**DE-A- 2 614 237**
**PATENT ABSTRACTS OF JAPAN Band 9, Nr. 237 (C-305)(1960) 24. September 1985**

(73) Patentinhaber: **SÜDZUCKER AKTIENGESELLSCHAFT MANNHEIM/OCHSENFURT Maximilianstrasse 10 W-6800 Mannheim 1 (DE)**

(72) Erfinder: **Keme, Thomas Bachstrasse 109 CH-5000 Aarau (CH)**
Erfinder: **Bollinger, Hartmut Oggersheimer Strasse 35 W-6700 Ludwigshafen (DE)**

(74) Vertreter: **Körber, Wolfhart, Dr.rer.nat. et al Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10 W-8000 München 22 (DE)**

## Beschreibung

Die Erfindung betrifft Verfahren zur Herstellung von zuckerfreien, diätetischen und/oder zahnschonenden Schokoladen gemäß dem Oberbegriff des Anspruchs 1.

Als Zuckeraustauschstoffe können zum Beispiel Zuckeralkohole, wie Sorbit, Mannit, Maltit, Lactit, Xylit, Palatinit® usw. oder auch das zahnfreundliche Disaccharid Palatinose®, Leucrose und Polydextrose, sowie Mischungen derselben, verwendet werden. Diese Zuckeraustauschstoffe werden mit Milchprodukten, wie ungezuckerter Kondensmilch, Vollmilchpulver, Magermilchpulver oder Milchproduktderivaten (lactosefrei oder lactosehaltig) mit oder ohne Zusatz von Kakaomasse, Kakaopulver, Kakaobutter oder Milchfett zusammengebracht, gegebenenfalls unter weiterem Zusatz von anderen Stoffen, wie Emulgatoren (Lezithin, PGPR, Ammoniumsalze der Phosphatidsäure (YN)), Aromastoffen (Vanillin usw.), Süßstoffen (Cyclamat, Saccharin usw.).

Man hat zwar schon Diabetikerschokolade bzw. zahnschonende Schokolade durch direkte Zubereitung aus Milchprodukten, Kakaomasse, Kakaobutter unter Verwendung von Zuckeraustauschstoffen hergestellt. Indessen zeigte sich bei ihrer Herstellung (Walzung und Conchierung) eine gewisse Agglomeratbildung. Diese Agglomerate bilden sich am Anfang oder während des Conchierprozesses, so daß das Endprodukt eine sandige, grobe Struktur aufweist. Wie gefunden wurde, liegt die Ursache unter anderem in der Hygroskopizität dieser Produkte, das heißt ihrer Eigenschaft, Wasser zu absorbieren. Einerseits wird Wasser bei der Herstellung der Schokolade während des Prozesses aus der Luft aufgenommen und andererseits kommt Wasser mit den zugesetzten Rohstoffen, wie Milchpulver, Spezial-Milcherzeugnisse, Kakaomasse usw., in das Produkt oder aber der Wasserlieferant kann der zugesetzte Zuckeraustauschstoff selbst sein, zum Beispiel wenn er selber einen höheren Wassergehalt aufweist oder wenn Wasser in Form von Kristallwasser gebunden ist.

Gleichzeitig stört der Wassergehalt der Masse bzw. die Hygroskopizität den Zerkleinerungsprozeß (das Walzen) beträchtlich, so daß oftmals schon während des Walzens die angestrebten Feinheiten nicht erreicht werden können.

Bei bestimmten Zuckeraustauschstoffen (in der heute angebotenen Form) ist auch das technologische Verhalten auf den 5-Walzwerken ungenügend. Die Leistungsschwankungen, die Inhomogenität der Masse wirken sich nachteilig auf die Endproduktqualität aus.

Als eine andere Grundlage zur Schokoladenproduktion dient das Crumbverfahren. Dieses Verfahren liefert ein besonderes Schokoladenaroma (attraktives, karameliges Milcharoma, milde Kakaonote) und bringt darüberhinaus wirtschaftliche Vorteile (gute Lagerfähigkeit, mögliche Conchierzeiteinsparung). Bekannte Crumb-Systeme sind unter anderem : Scott-Balfour-System, Crumb-Prozeß nach Dr. Powell/Cadbury, Groen-Prozeß. Nachteilig ist jedoch, daß man nicht alle Crumbverfahren zur Herstellung von zuckerfreien, diätetischen und-/oder zahnschonenden Schokoladen einsetzen kann.

Ein Nachteil der in der heutigen Form eingesetzten Zuckeraustauschstoffe sind die organoleptischen Eigenschaften der Diabetiker- und zahnschonenden Milchschokoladen. Der Grund liegt in der Einhaltung der durch die physikalischen Eigenschaften (niedriger Schmelzpunkt und/oder Kristallwasser) der Zuckeraustauschstoffe notwendigen niedrigen Conchiertemperatur (40 bis 50°C).

Die wichtigsten Funktionen der Conche sind Entgasung und mechanisch-thermische Behandlung. So ist bekannt, daß sich während des Conchierens Geschmackskomponenten durch Reaktionen zwischen Aminosäuren, reduzierenden Zuckern, sowie anderen Aromavorstufen (geschmacksgebende Stoffe) der Kakaomasse und Milchbestandteile bilden können. Dabei ist die Reaktionsgeschwindigkeit unter anderem abhängig von der Temperatur. Mit der Konsistenzverbesserung, als ein Resultat der Conchierung, geht offenbar eine Verfeinerung des Geschmacks einher. Ein anderer Zweck des Conchierens ist das Entfernen des Wassers und anderer wasserdampfflüchtiger Substanzen aus der Schokoladenmasse. Bei diesem Vorgang übernimmt der Wasserdampf auch die Eigenschaften eines Transportmittels, das heißt ein Teil der unerwünschten Geschmackskomponenten wird mittels Wasserdampf aus der Schokoladenmasse herausgetragen. Auch dieser Vorgang ist temperatur-, zeit- und konsistenzabhängig.

Weist die Schokoladenmasse eine zu hohe Viskosität auf, sind die Scherkräfte derart groß, daß die Temperaturen während des Conchierens die Kristalloberflächen der Zuckeraustauschstoffe zum Schmelzen bringen und sich dadurch Agglomerate bilden können.

Eine andere Erklärung dieser Agglomeratbildung, die wahrscheinlicher ist, ist die folgende :

Die Conchiertemperatur (40 bis 50°C) der Schokoladenmasse bewirkt, daß sich während des Conchierprozesses (6 bis 24 Std.) quantitativ mehr Zuckeraustauschstoffe im – wenn auch mengenmäßig wenigen – Wasser anreichern (auflösen). Die Kristalloberflächen werden angelöst und dadurch agglomerieren die Zuckeraustauschpartikel, bei gleichzeitigem Wasserverlust. Ein Teil der Zuckeraustauschstoffe rekristallisiert bzw. kristallisiert aus dieser übersättigten Lösung um. Dies führt bei Abkühlung zu einem Wachstum der bereits vorhandenen Zuckeraustauschkristalle und andererseits zu einer Änderung der Kristallstruktur.

Wichtige Faktoren bei der Agglomeratbildung sind die chemische Reinheit des verwendeten Zuckeraustauschstoffes, dessen Kristallform (stabil, instabil) und Kristallstruktur, das Vorhandensein von Kristallwasser, seine Löslichkeit in Wasser und die Hygroskopizität.

Das Geschmacksbild und die Süße von Schokoladen lassen sich maßgeblich durch die Auswahl der verwendeten Zuckeraustauschstoffe bestimmen. Beim Verzehr von monosaccharidalkoholhaltigen Produkten empfindet der Verbraucher in der Mundhöhle einen kühlenden Effekt, der durch die unterschiedliche Lösungsenthalpie der einzelnen Saccharide verursacht wird. Die Zuckeralkohole Xylit, Mannit und Sorbit haben hohe negative Lösungswärmen und geben dadurch einen atypischen Geschmack. Der Verbraucher verlangt aber einen saccharoseähnlichen Geschmackseindruck, das heißt, die oben erwähnten Zuckeralkohole (Monosaccharide) eignen sich weniger zur Verwendung in Schokoladen.

Dementsprechend liegt der Erfindung die Aufgabe zugrunde, den oben erwähnten, sich auf das Endprodukt negativ auswirkenden Eigenschaften der Zuckeraustauschstoffe durch geeignete Verfahren bzw. durch Auswirken dieser Verfahren auf die Zuckeraustauschstoff-Halbfabrikate (Diabetiker-Crumb) und Schokoladenherstellung zu begegnen, so daß man in Bezug auf Neigung zur Agglomeratbildung, Feinheit des Endproduktes, wesentlich verbesserte Produkte erhält.

Ferner soll das der Erfindung zugrundeliegende Verfahren das für Schokoladen typische Geschmacksprofil (saccharoseähnlich) in Verbindung mit Texturgebung und Vollmundigkeit zur Verfügung stellen.

Ferner sollen die zwischenproduktspezifischen Voraussetzungen für die Conchierung dahingehend verbessert werden, daß sie ein erhöhtes Sorptionsvermögen für das Kakaoaroma aufweisen.

Die Aufgabe ist erfindungsgemäß dadurch gelöst, daß man die Zuckeraustauschstoffe und die Milchprodukte vermischt, die Mischung erwärmt, die Kakaomasse zugibt und sodann unter Vakuum bis zur Entstehung eines pulverförmigen Crumbprodukts mit einem Wassergehalt kleiner als 1,3% (ohne Berücksichtigung der Kristallwassers) trocknet, so daß im Verlauf der späteren Conchierung bei Temperaturen zwischen 55°C und kleiner als 85°C gearbeitet werden kann, und dieses getrocknete, eventuell zwischengelagerte Crumbprodukt mit der – auf Trockensubstanz bezogen – Zusammensetzung von 30 bis 80 Gew.-% Zuckeraustauschstoffen, 10 bis 60 Gew.-% Milchprodukten und 0 bis 35 Gew.-% Kakaomasse auf eine Partikelgröße mit einem Durchmesser von kleiner als 3000 µm aussondert, anschließend das Crumbprodukt zumindest mit einem Teil der Kakaobutter und wahlweise unter Zufügen eventuell weiterer Kakaomasse und/oder anderer üblicher Schokoladenzutaten, ggfs. nach einem Vorwalzen, verwalzt und diese verwalzte Schokoladenmasse zusammen mit dem restlichen Teil der Kakaobutter in eine Conche einfüllt und bei Temperaturen zwischen 55°C und kleiner als 85°C, vorzugsweise 55°C bis 75°C, einer Conchierung unterwirft, sowie mit den bei der Schokoladenerzeugung üblichen Aromastoffen und gegebenenfalls mit Emulgatoren und Süßstoffen versetzt.

Die Erfindung wird durch die kennzeichnenden Merkmale der Unteransprüche weitergebildet.

Die in dem Vakuumkneter enthaltene Mischung (Verfahrensschritt (a)) weist erfindungsgemäß einen Trockensubstanzgehalt von 70 bis 99 Gew.-% auf.

Es ist ferner auch möglich, schon im Verfahrensschritt (g) einen Teil des Emulgators und im darauffolgenden Schritt (h) den restlichen Teil des Emulgators zuzugeben.

Zur Erzielung des gewünschten Geschmacksprofils des Schokoladenprodukts, der Texturgebung, sowie aus Gründen technologischer Verarbeitbarkeit werden Disaccharidalkohole wie Palatinit®, Maltit, Lactit, Palatinose® und Leucrose, sowie Polydextrose oder Mischungen derselben verwendet.

Die Stoffe, die für den Aufbau des Crumbs notwendig sind, werden also in solchen Mengen eingesetzt, daß nach dessen Herstellung die im Anspruch 1 festgelegten und auf Trockenmasse bezogenen prozentualen Anteile vorhanden sind. Von Vorteil ist hierbei, daß das entstehende Crumbprodukt einen Wassergehalt, der kleiner als 1,3% ist (ohne Berücksichtigung des Kristallwassers), aufweist.

Vorzugsweise beträgt der Gehalt an Zuckeraustauschstoffen im Crumbprodukt 45 bis 60 Gew.-%, derjenige der Milchprodukte 30 bis 45 Gew.-% und der der Kakaomasse 0 bis 15 Gew.-%.

Wird der zuckerfreie Crumb (nicht luftdicht verschlossen) vor der Weiterverarbeitung zwischengelagert, so nimmt er, je nach herrschenden Lagerbedingungen, mehr oder weniger schnell Wasser auf. Der Wassergehalt des Crumbproduktes kann dann bis zu 5,2% betragen ; normalerweise liegt er zwischen 1,0 und 3,5%. Bei der Weiterverarbeitung des zwischengelagerten Crumbs zur Schokolade wirkt sich dieser hohe Wassergehalt jedoch nicht negativ aus.

Als Ersatz für die Kakaomasse kann auch Kakaopulver mit und ohne Kakaobutterzusatz verwendet werden.

Ferner ist von Vorteil, daß man durch das erfindungsgemäße Crumbverfahren eine Verbesserung der physikalischen Konsistenz des Crumbproduktes erreichen kann. Es besteht aber auch ein ursächlicher Zusammenhang mit der Aromaveränderung, das heißt mit der Konsistenzverbesserung geht eine Verfeinerung des Geschmacks einher.

Gemäß dem vorgeschlagenen Crumbverfahren kristallisieren die Zuckeraustauschstoffe bei schneller Abkühlung sehr fein, d.h., sie bilden eine große spezifische Oberfläche aus, so daß ein erhöhtes Sorptions-

3

verhalten für Kakaoaromastoffe erreicht wird. Auf diese Weise kann das typische Schokoladen-Geschmacksprofil zur Verfügung gestellt werden.

Die nachstehenden Beispiele dienen der näheren Erläuterung der Erfindung.

**Beispiel 1**

(Diab.-Milk-Crumb)

| Es werden eingesetzt: | Gew.-Teile | Wassergehalt Gew.-Teile |
|---|---|---|
| 1. Palatinit® | 58,3 | 2,90 |
| 2. Kondensmilch ungezuckert, 8,2% Fett | 14,8 | 10,00 |
| 3. Vollmilchpulver 25% Fett | 33,2 | 1,16 |
| 4. Kakaomasse | 6,6 | 0,10 |
| | 112,9 | 14,16 |

**Zusammensetzung der ungezuckerten Kondensmilch**

| | | TS |
|---|---|---|
| Wasser | 67,6% | - |
| Fettgehalt | 8,2% | 25,3% |
| Lactose | 12,3% | 38,0% |
| Eiweiß | 9,9% | 30,5% |
| Asche | 2,0% | 6,2% |
| | 100,0% | 100,0% |

**Crumb-Herstellung**

Palatinit®, ungezuckerte Kondensmilch und Vollmilchpulver werden in einen Vakuumkneter gegeben und auf 94°C erwärmt ; die Kakaomasse wird zugesetzt und die Mischung unter Vakuum von $-7,8 \times 10^4$ bis $9,3 \times 10^4$ Pa getrocknet, bis ein pulverförmiges Produkt mit einem Wassergehalt von 1% entsteht. Nach dem Abkühlen auf ca. 20°C wird das Produkt durch ein Sieb mit einer Maschenweite von 2 mm passiert. Nach Abfüllung in Säcke kann es alsbald für die Herstellung von Milchschokolade weiterverwendet werden. Die Zusammensetzung des Diabetiker-Milk-Crumbs in TS ist die folgende :

| | |
|---|---|
| Palatinit® | 56,0% |
| Milchbestandteile (berechnet aus Vollmilchpulver 25% Fett) | 37,4% |
| Kakaomasse | 6,6% |

Der Wassergehalt beträgt ca. 0,6% und der Fettgehalt 13,0% (ohne Berücksichtigung des Kristallwassers).

**Schokoladerezeptur**

| | | |
|---|---|---|
| 1. | Diabetiker-Milk-Crumb (wie oben) | 70,33% |
| 2. | Kakaomasse | 6,60% |
| 3. | Kakaobutter | 22,30% |
| 4. | Lezithin | 0,48% |
| 5. | Saccharin-Na | 0,03% |
| 6. | Cyclamat-Na | 0,24% |
| 7. | Vanillin | 0,02% |
| | | 100,00% |

Der obige Diabetiker-Milk-Crumb wird mit Kakaomasse, Saccharin, Cyclamat und einen Teil Kakaobutter vermischt ; die Mischung wird mit oder ohne Vorwalzen gewalzt und dann mit der restlichen Kakaobutter in die Conche eingefüllt und einer Conchierung unterzogen, wobei die Conchiertemperatur 67 bis 71°C beträgt, also im Gegensatz zur sonst üblichen Conchiertemperatur höher als 40 bis 50°C sein kann. Die Conchierzeit beträgt üblicherweise 12-24 Stunden, kann aber auch bei Einsatz neuerer Anlagen bis auf etwa 1 Std. verkürzt werden. Nach der Lezithin- und Aromazugabe erhält man eine Schokolade, die folgende analytische Daten aufweist :

| | |
|---|---|
| Wassergehalt: | 0,5-0,8% (Trockenschrank 102±2°C 3,5 Std.), |
| Rückstand auf 20µm-Sieb: | 4% in fettfreier Trockenmasse, |
| Fettgehalt: | 35,0-35,5%, |
| Viskosität 40°C: | ca. 4400 mPa s. |

Geschmacklich weist diese Schokolade einen leichten Caramelgeschmack auf und ist im Vergleich zur Diabetiker-Schokolade, hergestellt nach konventionellem Verfahren, in allen Belangen deutlich überlegen.

**Beispiel 2**

(Zahnschonender Milk-Crumb)

| | | | Wassergehalt |
|---|---|---|---|
| Es werden eingesetzt: | | Gew.-Teile | Gew.-Teile |
| 1. | Palatinit® | 58,3 | 2,90 |
| 2. | Milchpulver spezial, lactosearm, 25% Fett | 38,0 | 1,33 |
| 3. | Wasser | 10,0 | 10,00 |
| 4. | Kakaomasse | 6,6 | 0,10 |
| | | 112,9 | 14,33 |

Die Crumb-Herstellung, sowie die weitere Verarbeitung zur Milchschokolade sind identisch mit dem Beispiel 1.

5

**Beispiel 3**

(Diabetiker-Milk-Crumb)

| Es werden eingesetzt: | GewTeile | Wassergehalt GewTeile |
|---|---|---|
| 1. Maltit, kristallin | 53,7 | - |
| 2. Vollmilchpulver 25% Fett | 37,1 | 1,3 |
| 3. Wasser | 11,5 | 11,5 |
| 4. Kakaomasse | 6,5 | 0,1 |
| | 108,7 | 12,9 |

Die Crumb-Herstellung erfolgt entsprechend der in Beispiel 1. Die Zusammensetzung des Crumbs entspricht der in Beispiel 1.

Der Wasser- und Fettgehalt betragen ca. 1,0% und 13,0%.

**Schokoladenherstellung**

Die Rezeptur entspricht derjenigen in Beispiel 1 unter Berücksichtigung der Süßkraft des Maltits, d.h. Saccharin-Na und Cyklamat-Na können reduziert oder, unter Berücksichtigung der Süßkraft der Süßstoffe, ersetzt werden durch Acesulfam-K.

Das Herstellungsverfahren entspricht demjenigen in Beispiel 1.

**Beispiel 4**

(Zahnschonender Milk-Crumb)

| Es werden eingesetzt: | GewTeile | Wassergehalt GewTeile |
|---|---|---|
| 1. Palatinose® | 55,4 | - |
| 2. Milchpulver Spezial, lactosearm, 25% Fett | 38,0 | 1,33 |
| 3. Wasser | 19,0 | 19,0 |
| 4. Kakaomasse | 6,6 | 0,1 |
| | 119,0 | 20,43 |

Die Crumb-Herstellung sowie die weitere Verarbeitung zur Milch-Schokolade erfolgen entsprechend Beispiel 1.

**Beispiel 5**

(Diabetiker-Milk-Crumb)

| Es werden eingesetzt: | GewTeile | Wassergehalt GewTeile |
|---|---|---|
| 1. Lactit, Dihydrat | 61,5 | 6,15 |
| 2. Vollmilchpulver, 25% Fett | 38,0 | 1,33 |
| 3. Wasser | 6,8 | 6,8 |
| 4. Kakaomasse | 6,6 | 0,1 |
| | 112,9 | 14,38 |

6

Die Crumb-Herstellung erfolgt entsprechend der in Beispiel 1. Die Zusammensetzung des Crumbs entspricht der in Beispiel 1.

Der Wasser- und der Fettgehalt betragen ca. 1,0% und 3,0% (ohne Berücksichtigung des Kristallwassers).

## Schokoladenherstellung

Die Rezeptur entspricht derjenigen in Beispiel 1, unter Berücksichtigung der Süßkraft von Lactit, d.h. Saccharin-Na und Cyklamat-Na sollen erhöht oder durch Acesulfam-K ersetzt werden, unter Berücksichtigung der Süßkraft der Süßstoffe.

Das Herstellungsverfahren entspricht demjenigen in Beispiel 1.

Die in den Beispielen verwendete Methode zur Wasserbestimmung (Trockenschrankmethode) ergibt die gleichen Werte wie die in der amtlichen Sammlung von Untersuchungsverfahren nach § 35 LMBG, Beudt-Verlag, Berlin-Köln, Dezember 1985, veröffentlichte Methode L 44.00. Etwas geringere Werte für den Wassergehalt ermittelt man mit der Karl-Fischer-Methode, wenn man die Schokolade bei 50°C in einem Gemisch aus Hydranal®-Solvent und Chloroform (im Verhältnis 2 : 1) bestimmt.

## Ansprüche

1. Verfahren zur Herstellung von zuckerfreien, diätetischen und/oder zahnschonenden Schokoladen unter vorangehender gesonderter Gewinnung eines zuckerfreien Crumbs und dessen Weiterverarbeitung, unter Verwendung der sonst üblichen Schokoladenbestandteile und anschließender Conchierung zu Schokoladen, dadurch gekennzeichnet, daß man

(a) die Zuckeraustauschstoffe und die Milchprodukte vermischt,

(b) die Mischung erwärmt,

(c) die Kakaomasse zugibt und

(d) sodann unter Vakuum bis zur Entstehung eines pulverförmigen Crumbprodukts mit einem Wassergehalt kleiner als 1,3% (ohne Berücksichtigung des Kristallwassers) trocknet, so daß im Verlauf der späteren Conchierung bei Temperaturen zwischen 55°C und kleiner als 85°C gearbeitet werden kann, und

(e) dieses getrocknete, eventuell zwischengelagerte Crumbprodukt mit der – auf Trockensubstanz bezogen – Zusammensetzung von 30 bis 80 Gew.-% Zuckeraustauschstoffen, 10 bis 60 Gew.-% Milchprodukten und 0 bis 35 Gew.-% Kakaomasse auf eine Partikelgröße mit einem Durchmesser von kleiner als 3000 µm aussondert,

(f) anschließend das Crumbprodukt zumindest mit einem Teil der Kakaobutter und wahlweise unter Zufügen eventuell weiterer Kakaomasse und/oder anderer üblicher Schokoladenzutaten, gegebenenfalls nach einem Vorwalzen, verwalzt und

(g) diese verwalzte Schokoladenmasse zusammen mit dem restlichen Teil der Kakaobutter in eine Conche einfüllt und

(h) bei Temperaturen zwischen 55°C und kleiner als 85°C, vorzugsweise 55°C bis 75°C, einer Conchierung unterwirft, sowie mit den bei der Schokoladeerzeugung üblichen Aromastoffen und gegebenenfalls mit Emulgatoren und Süßstoffen versetzt.

2. Verfahren gemäß Anspruch 1, dadurch gekennzeichnet, daß für den Verfahrensschritt (a) ein Kneter, insbesondere ein Vakuumkneter, verwendet wird.

3. Verfahren gemäß Anspruch 2, dadurch gekennzeichnet, daß die in den Vakuumkneter eingetragene Mischung auf 50 bis 140°C erwärmt wird.

4. Verfahren gemäß den Ansprüchen 1 und 3, dadurch gekennzeichnet, daß in den Vakuumkneter die Kakaomasse zugegeben und sodann unter einem Vakuum von $-4 \times 10^4$ bis $10^5$ Pa bis zur Entstehung eines pulverförmigen Produkts mit einem Wassergehalt, der kleiner als 1,3% ist (ohne Berücksichtigung des Kristallwassers), getrocknet wird.

5. Verfahren gemäß einem der Ansprüche 1 bis 4, dadurch gekennzeichnet, daß für das Crumbprodukt als Michprodukt Vollmilchpulver mit 25% Fett, Magermilchpulver oder eine Mischung aus ungezuckerter Kondensmilch mit Vollmilchpulver (25% Fettgehalt) bzw. Magermilchpulver oder ein lactosearmes oder lactosefreies Milchproduktderivat jeweils mit oder ohne 25% Fettgehalt eingesetzt wird.

6. Verfahren gemäß Anspruch 1, dadurch gekennzeichnet, daß man im Verfahrensschritt (f) das Crumbprodukt mit oder ohne Kakaomasse, Haselnuß- oder Mandelbrei und einem Teil der Kakaobutter, ggfs. nach einem Vorwalzen, verwalzt.

7. Verfahren gemäß Anspruch 1, dadurch gekennzeichnet, daß ein Disaccharidalkohol oder ein Disaccharid als Zuckeraustauschstoff verwendet wird.

8. Schokoladenprodukt hergestellt nach einem Verfahren gemäß Anspruch 7, dadurch gekennzeichnet, daß die Zuckeraustauschstoffe aus der folgenden Gruppe ausgewählt sind : Palatinit®, Leucrose, Maltit, Lactit, Polydextrose, oder aus Mischungen derselben bestehen.

9. Crumbprodukt, hergestellt nach einem Verfahren gemäß den Schritten (a) bis (d) von Anspruch 1.

10. Schokoladenprodukt, hergestellt nach einem Verfahren gemäß Anspruch 1.

## Claims

1. A process for the production of sugar-free dietetic or tooth-preserving chocolate, with the previous separate recovery of a sugar-free crumb and further processing thereof employing the other usual constituents of chocolate and subsequent conging to form chocolate, characterised by
   a) mixing the sugar substitute and the milk product,
   b) heating the mixture,
   c) adding the cocoa mass,
   d) then drying under vacuum until a powder crumb product is obtained with a water content (apart from water of crystallisation) of less than 1.3%, so that it is possible to work in the course of the subsequent conging at temperatures between 55°C and less than 85°C, and
   e) separating this dried crumb product – possibly after storage – having the composition (on a dry substance basis) 30-80% by wt. sugar substitute, 10 to 60% by wt. of milk products and 0 to 35% cocoa mass to obtain a product with a particle size of less than 3000 μm diameter,
   f) then rolling the crumb product with at least part of the cocoa butter, if desired with the addition of any further cocoa mass and/or other usual constituents of chocolate, with or without pre-rolling, and
   g) charging this rolled chocolate mass together with the remaining part of the cocoa butter into a conge, and
   h) subjecting it to conging at temperatures between 55°C and less than 85°C, preferably 55°C to 75°C, and treating it with the aroma materials usual in chocolate manufacture and if desired with chocolate manufacture and if desired with emulsifiers and sweeteners.

2. A process according to claim 1, characterised in that a kneading machine, in particular a vacuum kneader, is used for step a).

3. A process according to claim 2, characterised in that the mixture introduced into the vacuum kneader is heated to 50 to 140°C.

4. A process according to claim 1 and claim 3, characterised in that the cocoa mass is charged into the vacuum kneader and is then dried under a vacuum of $-4 \times 10^4$ to $10^5$ Pascal until a powder product having a water content (apart from water of crystallisation) less than 1.3% is obtained.

5. A process according to any one of claims 1 to 4, characterised in that the milk product used for the crumb product is whole milk powder with 25% fat, skimmed milk powder or a mixture of unsweetened condensed milk with whole milk powder (fat content 25%) or skimmed milk powder or a low-lactose or lactose-free milk product derivative, in each case with or without a fat content of 25%.

6. A process according to claim 1, characterised in that in step f) the crumb product is rolled with or without cocoa mass, hazel nut or almond paste and part of the cocoa butter, with or without pre-rolling.

7. A process according to claim 1, characterised in that a disaccharide alcohol or a disaccharide is used as sugar substitute.

8. A chocolate product made by a process according to claim 7, characterised in that the sugar substitute is selected from the following group : Palatinit®, leucrose, maltitol, lactitol, polydextrose, or mixtures thereof.

9. A crumb product made by a process according to steps a) to d) of claim 1.

10. A chocolate product made by a process according to claim 1.

## Revendications

1. Procédé pour la production de chocolats sans sucre, diététiques et/ou ménageant les dents, avec obtention préalable séparée d'un Crumb sans sucre et transformation de celui-ci, en utilisant les constituants usuels des chocolats, et ensuite par conchage produisant des chocolats, **caractérisé** en ce qu'on :
   a) mélange les substances remplaçant le sucre et les produits laitiers,
   b) chauffe le mélange,
   c) ajoute la masse de cacao, et
   d) sèche ensuite sous vide jusqu'à formation d'un produit Crumb pulvérulent avec une teneur en eau inférieure à 1,3% (sans tenir compte de l'eau de cristallisation), de telle sorte qu'au cours du conchage ultérieur on puisse travailler à des températures entre 55°C et moins de 85°C, et

e) retire ce produit Crumb séché, ayant été éventuellement stocké entretemps, avec une composition en matière sèche de 30 à 80% en poids de substances remplaçant le sucre, de 10 à 60% en poids de produits laitiers et de 0 à 35% en poids de masse de cacao, avec une taille de particules d'un diamètre inférieur à 3000 μm,

f) soumet ensuite le produit Crumb avec au moins une partie du beurre de cacao et avec addition éventuelle, au choix, d'un supplément de masse de cacao et/ou d'autres additifs habituels des chocolats, le cas échéant après un broyage préliminaire, à un broyage et

g) charge dans une conche cette masse broyée pour chocolats, ensemble avec la partie restante du beurre de cacao, et

h) soumet cette masse à un conchage à des températures entre 55°C et moins de 85°C, de préférence entre 55°C et 75°C, en la mélangeant avec les substances aromatiques habituelles dans la fabrication des chocolats, et le cas échéant avec des émulsionnants et des édulcorants.

2. Procédé selon la revendication 1, caractérisé en ce qu'on utilise, pour la phase (a) du procédé, un malaxeur, en particulier un malaxeur sous vide.

3. Procédé selon la revendication 2, caractérisé en ce que le mélange chargé dans le malaxeur sous vide est chauffé à une température entre 50 et 140°C.

4. Procédé selon les revendications 1 et 3, caractérisé en ce qu'on ajoute la masse de cacao dans le malaxeur sous vide et qu'on sèche ensuite sous un vide de $-4 \times 10^4$ à $10^5$ Pa jusqu'à formation d'un produit pulvérulent ayant une teneur en eau inférieure à 1,3% (sans tenir compte de l'eau de cristallisation).

5. Procédé selon une des revendications 1 à 4, caractérisé en ce qu'on utilise comme produit laitier pour le produit Crumb de la poudre de lait complet à 25% de matière grasse, de la poudre de lait écrémé ou un mélange de lait condensé non sucré avec de la poudre de lait complet (à 25% de matière grasse) ou de la poudre de lait écrémé ou encore un dérivé de produit laitier à faible teneur en lactose ou exempt de lactose, avec ou sans 25% de matière grasse.

6. Procédé selon la revendication 1, caractérisé en ce que, dans la phase (f) du procédé, on soumet le produit Crumb à un broyage, le cas échéant après un pré-broyage, avec ou sans masse de cacao, purée de noisettes ou d'amandes, et une partie du beurre de cacao.

7. Procédé selon la revendication 1, caractérisé en ce qu'on utilise, comme substance remplaçant le sucre, un alcool disaccharidique ou un dissacharide.

8. Produit de chocolat préparé par un procédé selon la revendication 7, caractérisé en ce que les substances de remplacement du sucre sont choisies dans les groupes suivants : Palatinit®, leucrose, maltite, lactite, polydextrose, ou consistent en des mélanges de ceux-ci.

9. Produit Crumb, préparé par un procédé selon les opérations (a) à (d) de la revendication 1.

10. Produit de chocolat, préparé par un procédé selon la revendication 1.